# EUROPEAN PATENT APPLICATION

(11) **EP 4 596 759 A1**
(43) Date of publication of application: **06.08.2025**
(21) Application number: 23871255.8
(22) Date of filing: 24.02.2023
(51) Int. Cl.: C25B 9/00, C25B 1/04, F16L 55/00, F16L 59/06

(54) **INSULATING PIPING, WATER ELECTROLYSIS SYSTEM, AND PIPING DAMAGE DETECTION METHOD**

(30) Priority: 30.09.2022 JP 2022158238
(71) Applicant: Hitachi, Ltd., Tokyo 100-8280 (JP)
(72) Inventor: FUJITA, Shinji, Tokyo 100-8280 (JP); SUGIMASA, Masatoshi, Tokyo 100-8280 (JP); GUNJI, Akira, Tokyo 100-8280 (JP); SAKUMA, Hirotaka, Tokyo 100-8280 (JP); MIZUKAMI, Takaaki, Tokyo 100-8280 (JP); GE, Jiachen, Tokyo 100-8280 (JP); KAKUYA, Hiromu, Tokyo 100-8280 (JP)
(74) Representative: Mewburn Ellis LLP
(86) International application number: PCT/JP2023/006804
(87) International publication number: WO 2024/070006

(57) **Abstract**

In order to improve robustness of a water electrolysis system, there is provided an insulating piping configured by a double tube including an inner tube (130) that connects a water electrolysis stack and an auxiliary machine and through which a fluid flows, and an outer tube (12) provided on an outer side of the inner tube (130) via the inner tube (130) and an outer tube inner space (14); in which the outer tube (12) has an insulating property, the water electrolysis stack and the auxiliary machine are insulated from each other in the inner tube (130), and a dry gas (13) having a humidity of less than or equal to a predetermined value is enclosed in an outer tube inner space (14) that is the space at a pressure of the fluid flowing inside the inner tube (130) and a pressure higher than an atmospheric pressure.

## Description

### Technical Field

The present invention relates to a technique of an insulating piping, a water electrolysis system, and a piping damage detection method.

### Background Art

In recent years, environmental problems such as global warming and energy problems such as depletion of petroleum resources have attracted attention accompanying an increase in emissions of greenhouse gases including carbon dioxide. From such a viewpoint, hydrogen energy has attracted attention as clean alternative energy. However, to replace existing fossil fuels with hydrogen energy, a large amount of hydrogen is required.

As one method for producing hydrogen, there is a water electrolysis device. As a water electrolysis device, a device using an electrolyte membrane such as a solid polymer membrane as a diaphragm is known. Such a water electrolysis device includes a water electrolysis stack. The water electrolysis stack also includes a plurality of water electrolysis cells. The water electrolysis cell has an electrolyte membrane, an anode, and a cathode. The electrolyte membrane is used as a diaphragm in water electrolysis. The anode is provided on one surface of the electrolyte membrane. The cathode is provided on the other surface of the electrolyte membrane. Furthermore, a voltage for water electrolysis is applied between the anode and the cathode of each water electrolysis cell.

When the electrolyte membrane is a proton conductive membrane, water on the anode side is electrolyzed to generate oxygen on the anode side. In addition, hydrogen is generated on the cathode side by H+ ions moved through the electrolyte membrane. The oxygen on the anode side is sent to the outside through the piping together with the surplus water. On the other hand, when the electrolyte membrane is an OH-ion conductor membrane, water on the cathode side is electrolyzed to generate hydrogen on the cathode side. In addition, oxygen and water are generated on the anode side by OH- ions moved through the electrolyte membrane. The hydrogen on the cathode side is sent to the outside through the piping together with the water. The oxygen and water on the anode side are sent to the outside through the piping. Note that the conversion efficiency of power into hydrogen in a general water electrolysis stack is about 80 to 90%, and the rest is converted into heat to generate heat.

For the purpose of reducing the cost of hydrogen production, enlargement of a water electrolysis system has been advanced mainly in Europe, and introduction of a water electrolysis system having a capacity of 500 GW (gigawatt) is expected by 2050. Accordingly, reduction in equipment cost is expected by mass production efficiency of the water electrolysis stack required for hydrogen production. However, a DC power supply requiring a large current and a low voltage becomes a special use, and it is predicted that cost reduction will not proceed. Therefore, it is necessary to reduce the cost of the power supply.

NPL 1 describes that in a large-scale water electrolysis system having a capacity exceeding 20 MW (megawatts), it is necessary to operate a large number of water electrolysis stacks with one power supply for highly efficient operation of the power supply. As a method for collectively operating the large number of water electrolysis stacks described in NPL 1, the large number of water electrolysis stacks are electrically connected in series (hereinafter, referred to as multi-series connection). It is possible to use a general large DC power supply by increasing the voltage by multi-series connection of the water electrolysis stacks. It is considered that this makes it possible to realize large-scale hydrogen production at low cost.

In addition, PTL 1 discloses "A lifespan determination device 10 for a liquefied hydrogen double tube 1 that includes an inner tube 2, an outer tube 3 externally fitted to the inner tube 2 at an interval, and a vacuum layer 4 formed between the inner tube 2 and the outer tube 3, and is capable of allowing liquefied hydrogen 5 to pass to the inner tube 2, the lifespan determination device including a pressure sensor 11 that periodically detects a first pressure P1 in the vacuum layer 4 a plurality of times at time of non-liquid passing; an increase rate calculation unit 14 that includes an ECU 13 for controlling the pressure sensor 11, the ECU 13 calculating a pressure increase rate k1 in the vacuum layer 4 based on the plurality of detected first pressures P1; and a determination unit 15 that determines that the liquefied hydrogen double tube 1 is at a durable limit on condition that the calculated pressure increase rate k1 is larger than a first threshold value T1", a method for determining the lifespan of a liquefied hydrogen double tube and a device thereof (see Abstract).

PTL 2 discloses a hydrogen leak monitoring system from a conduit or "a conduit for supplying hydrogen is a double tube, a mixed gas of hydrogen and nitrogen is caused to flow in the inner tube 4 from a hydrogen production site 1 to a hydrogen station 2, nitrogen is caused to flow in a space portion between the inner tube 4 and the outer tube 5 in an opposite direction, a leakage of hydrogen is detected by a plurality of hydrogen gas detectors 7 with transmission cables 9 installed in the space portion between the inner tube 4 and the outer tube 5, a leakage of nitrogen is detected by using a plurality of nitrogen flow meters 8 installed in a flow path of the same system, and when a leakage is detected in either one of the inner tube 4, and the space portion between the inner tube 4 and the outer tube 5, a place or section where the leakage is detected is transmitted to a monitoring center 3 through the transmission cables 9, and the flow of the mixed gas of hydrogen and nitrogen is shielded by a command from the monitoring center 3" (see Abstract).

### Citation List

### Patent Literatures

PTL 1: JP 2017-20914 A
PTL 2: JP 2016-193810 A

### Non-Patent Literature

NPL 1: IRENA's report, "Green Hydrogen cost reduction" [online], [searched on September 21, 1992], Internet <URL: https://www.irena.org/- /media/Files/IRENA/Agency/Publication/2020/Dec/IRENA_Green_ hydrogen_cost_2020.pdf>

### Summary of Invention

### Technical Problem

When a high voltage is applied to the water electrolysis stacks by multi-series connection, electrical insulation of a piping part between the water electrolysis stack to which the high voltage is applied and an auxiliary machine which is a ground potential becomes a problem. Here, the auxiliary machine is a pump, various tanks, or the like. As a specification of a piping having an insulating property applied to the water electrolysis stack, it is necessary to satisfy the following conditions and the like. (Z1) To withstand high temperatures of about 60 to 90°C as the water electrolysis stack generates heat. (Z2) To have a pressure resistance greater than or equal to a water pressure or a gas pressure in the insulating piping. (Z3) To have low hydrogen permeability. (Z4) To have electrical dielectric strength when a high voltage is applied.

PTL 1 describes a configuration in which a double tube is configured by an inner tube and an outer tube made of FRP, and a space between the inner tube and the outer tube is evacuated. In a case where the space between the inner tube and the outer tube is evacuated, when breakage occurs in the inner tube, hydrogen flowing in the inner tube actively acts on the side where leakage occurs, and thus an appropriate pressure configuration is not obtained. That is, in a case where the space between the inner tube and the outer tube is evacuated, when breakage occurs in the inner tube, hydrogen flowing in the inner tube spurts to the vacuum side, that is, the outer side of the inner tube.

Furthermore, PTL 2 describes a configuration in which nitrogen is flowed between an inner tube and an outer tube. However, PTL 2 also clearly describes that the pressure between the inner tube and the outer tube is made lower than that of the inner tube, and does not have a configuration for preventing leakage of hydrogen flowing through the inner tube to the outside. In addition, since the inner tube is formed of a steel tube, electrical insulation cannot be provided between the water electrolysis stack and the auxiliary machine. Even if a non-conductive material is applied to a part of the inner tube, the insulation performance of the part may be deteriorated due to the influence of moisture of nitrogen flowing in the outer tube and dust. In addition, with such a configuration, there is a possibility that an insulation design having robustness becomes difficult.

In addition, hydrogen gas may leak when an insulating piping for a water electrolysis system is damaged. For this reason, it is necessary to quickly detect a damaged place of the insulating piping and specify the damaged place. That is, a system control for specifying a damaged place and determining whether it is necessary to partially or entirely stop the water electrolysis system becomes necessary.

The present invention has been made in view of such a background, and an object of the present invention is to improve robustness of a water electrolysis system.

### Solution to Problem

In order to solve the above problems, the present invention provides an insulating piping configured by a double tube including an inner tube that connects a water electrolysis stack and an auxiliary machine and through which a fluid flows, and an outer tube provided on an outer side of the inner tube with a space interposed between the outer tube and the inner tube; in which the outer tube has an insulating property, the water electrolysis stack and the auxiliary machine are insulated from each other in the inner tube, and a dry gas having a humidity of less than or equal to a predetermined value is enclosed in an outer tube inner space that is the space at a pressure of the fluid flowing inside the inner tube and a pressure higher than an atmospheric pressure.

Other solutions will be appropriately described in the embodiments.

### Advantageous Effects of Invention

According to the present invention, the robustness of the water electrolysis system can be improved.

### Brief Description of Drawings

[FIG. 1] FIG. 1 is a schematic configuration diagram of a water electrolysis system according to the present embodiment.
[FIG. 2] FIG. 2 is a schematic configuration diagram of an insulating piping according to the present embodiment.
[FIG. 3] FIG. 3 is a diagram illustrating a hardware configuration of a determination device.
[FIG. 4] FIG. 4 is a flowchart showing a procedure of a piping damage detection method on an insulating piping performed in the present embodiment.
[FIG. 5] FIG. 5 is a flowchart showing another procedure of a piping damage detection method on an insulating piping performed in the present embodiment.
[FIG. 6] FIG. 6 is a view illustrating a state in which an outer tube of the insulating piping is damaged.
[FIG. 7A] FIG. 7A is a diagram illustrating a time-series of an outer tube inner pressure measured by a pressure sensor.
[FIG. 7B] FIG. 7B is a diagram illustrating a time-series of a concentration of the gas measured by a gas concentration meter.
[FIG. 8] FIG. 8 is a diagram illustrating a state in which an insulating tube is damaged.
[FIG. 9A] FIG. 9A is a diagram illustrating a time-series of an outer tube inner pressure measured by a pressure sensor.
[FIG. 9B] FIG. 9B is a diagram (I) illustrating a time-series of a concentration of the gas measured by a gas concentration meter.
[FIG. 9C] FIG. 9C is a diagram (II) illustrating a time-series of a concentration of the gas measured by the gas concentration meter.
[FIG. 10] FIG. 10 is a diagram illustrating a configuration of an insulating piping according to the present embodiment.

### Description of Embodiments

Next, modes for carrying out the present invention (referred to as "embodiments") will be described in detail while appropriately referring to the drawings.

### [Water electrolysis system Z]

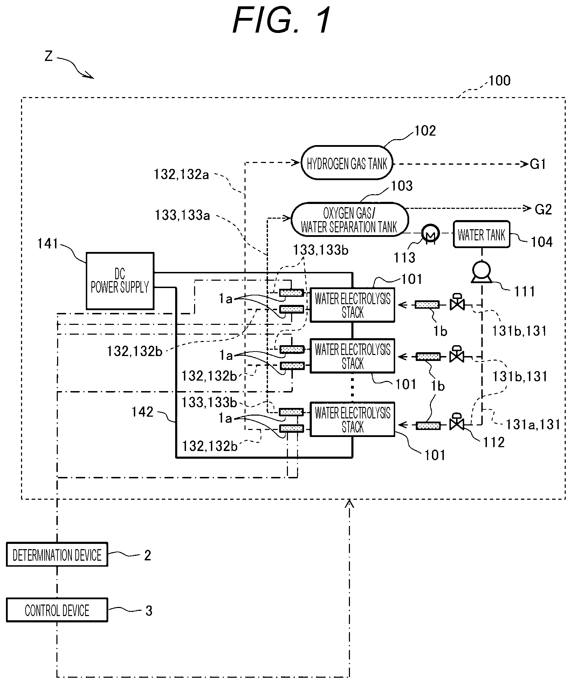

FIG. 1 is a schematic configuration diagram of a water electrolysis system Z according to the present embodiment.

The water electrolysis system Z mainly includes a water electrolysis device 100, a determination device 2, and a control device 3. The water electrolysis device 100 includes a water electrolysis stack 101, a hydrogen gas tank 102, an oxygen gas/water separation tank 103, a water tank 104, and a DC power supply 141. The water electrolysis device 100 further includes a water supply piping 131, a hydrogen gas piping 132, and an oxygen gas piping 133. Furthermore, the water electrolysis device 100 includes a water feeding pump 111, a heat exchanger 113, a flow rate adjustment valve 112, a power cable 142, and insulating piping 1a, 1b. Note that the hydrogen gas tank 102, the oxygen gas/water separation tank 103, the water tank 104, the water feeding pump 111, the heat exchanger 113, the flow rate adjustment valve 112, and the like may be appropriately referred to as auxiliary machines.

A plurality of water electrolysis stacks 101 that preform water electrolysis are provided. Water (pure water) is stored in the water tank 104. The water supply piping 131 connects the water tank 104 and the water electrolysis stack 101, and water flows through the inside. The water supply piping 131 has a water supply main tube 131a connected to the water tank 104 and a water supply branch tube 131b branched from the water supply main tube 131a and connected to the respective water electrolysis stacks 101. The water supply main tube 131a is provided with the water feeding pump 111, and each water supply branch tube 131b is provided with the flow rate adjustment valve 112 and the insulating piping 1b.

The hydrogen gas tank 102 stores hydrogen gas G1 generated as a result of electrolysis. The hydrogen gas piping 132 connects the water electrolysis stack 101 and the hydrogen gas tank 102, and the hydrogen gas G1 flows through the inside. The hydrogen gas piping 132 includes a hydrogen gas branch tube 132b connected to each water electrolysis stack 101 and a hydrogen gas main tube 132a to which each hydrogen gas branch tube 132b merges and which is connected to the hydrogen gas tank 102.

Furthermore, the oxygen gas/water separation tank 103 which is an oxygen gas tank stores the oxygen gas G2 generated as a result of the electrolysis. The oxygen gas piping 133 connects the water electrolysis stack 101 and the oxygen gas/water separation tank 103, and the oxygen gas G2 flows through the inside. The oxygen gas piping 133 includes an oxygen gas branch to 133b connected to each water electrolysis stack 101 and an oxygen gas main tube 133a to which each oxygen gas branch tube 133b merges and which is connected to the oxygen gas/water separation tank 103.

An insulating piping 1a is provided in each of the hydrogen gas branch tube 132b and the oxygen gas branch tube 133b.

The DC power supply 141 and the respective water electrolysis stacks 101 are connected in series by a power cable 142 (Hereinafter, it is referred to as multi-series connection). Then, the DC power supply 141 applies a DC voltage to each water electrolysis stack 101.

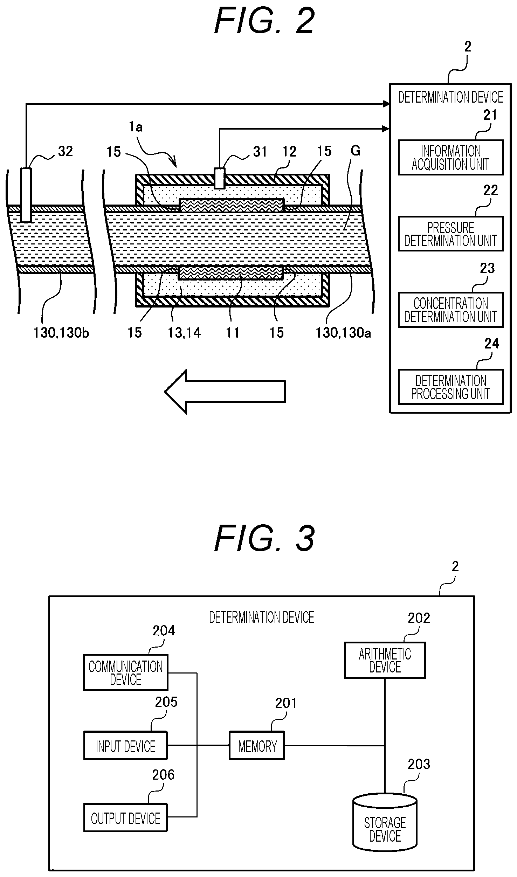

As described above, the insulating piping 1a is provided in at least each of the hydrogen gas branch tube 132b and the oxygen gas branch tube 133b. The insulating piping 1a is provided with a pressure sensor 31 (see FIG. 2) as described later. As described later with reference to FIG. 2, a gas concentration meter 32 which is a gas concentration measurement unit is provided downstream of the insulating piping 1a. The determination device 2 detects the damage on the insulating piping 1a based on the information collected from the pressure sensor 31 and the gas concentration meter 32.

In addition, it is conceivable that the water electrolysis device 100 includes various measurement devices and control valves in addition to the configuration illustrated in FIG. 1. However, these configurations are omitted in the present embodiment because to avoid complication. The control device 3 performs complete stop or partial stop of the water electrolysis device 100 based on the damage detection by the determination device 2. In addition, the control device 3 controls, for example, the water feeding pump 111, the flow rate adjustment valve 112, the DC power supply 141, and the like.

The hydrogen production step by the water electrolysis device 100 is similar to that of a general water electrolysis device. Water (pure water) is supplied from the water tank 104 in which water is stored to the oxygen electrode side of each water electrolysis stack 101 by water feeding pump 111. As described above, predetermined current and voltage are applied to each water electrolysis stack 101 by the DC power supply 141 through the power cable 142. In this way, in the water electrolysis stack 101, the hydrogen gas G1 and the oxygen gas G2 are generated by electrolysis of water.

The hydrogen gas G1 generated as a result of the electrolysis is passed through the hydrogen gas piping 132, collected by the hydrogen gas tank 102, and then supplied to the outside of the water electrolysis device 100. Since the hydrogen gas G1 generated by electrolysis contains moisture having a saturated water vapor content, a drying facility (not illustrated) may be provided in the hydrogen gas piping 132.

Furthermore, the oxygen gas G2 generated as a result of the electrolysis is passed through the oxygen gas piping 133 together with the non-electrolyzed water, and is collected in the oxygen gas/water separation tank 103. Then, the oxygen gas G2 gas-liquid separated in the oxygen gas/water separation tank 103 is supplied to the outside.

The water gas-liquid separated in the oxygen gas/water separation tank 103 is cooled by the heat exchanger 113 and collected in the water tank 104. The conversion efficiency of the water electrolysis by power in the water electrolysis stack 101 is about 80 to 90%, and the rest is converted into heat. Therefore, the temperature of the gas-liquid water increases. The heat exchanger 113 is provided to lower the temperature of such water. However, in the case of a structure in which the piping length of the oxygen gas piping 133 is sufficiently long and water is naturally cooled while flowing through the oxygen gas piping 133, the heat exchanger 113 may not be provided.

The water collected in water tank 104 is again supplied to the water electrolysis stack 101 through water feeding pump 111.

Note that as a specification of the general water electrolysis stack 101, it is often specified to manage the conductivity of water supplied to the water electrolysis stack 101 to less than or equal to 1 µS/cm. Therefore, it is preferable that the conductivity of water is managed by a conductivity meter, an ion exchange membrane, or the like (not illustrated) as necessary. Furthermore, as the electrolysis of water progresses, the amount of water inside the water tank 104 decreases, so that water is supplied from the outside to the water tank 104.

As materials of the water supply piping 131, the hydrogen gas piping 132, and the oxygen gas piping 133, materials having no leakage or brittleness with respect to the hydrogen gas G1, the oxygen gas G2, and water (collectively referred to as fluid) are used. Examples of such a material include steel use stainless (SUS), polyethylene, and fiber reinforced plastics (FRP) with a plastic lining. It is desirable that SUS is used for the water supply piping 131, the hydrogen gas piping 132, and the oxygen gas piping 133 in consideration of leakage prevention property and robustness of the fluid flowing through the water supply piping 131, the hydrogen gas piping 132, and the oxygen gas piping 133. As described above, when SUS is used for the water supply piping 131, the hydrogen gas piping 132, and the oxygen gas piping 133, the water supply piping 131, the hydrogen gas piping 132, and the oxygen gas piping 133 become conductive.

When the water electrolysis stacks 101 are multi-series connected as in FIG. 1, the DC power supply 141 applies a voltage of (voltage applied to each water electrolysis stack 101) × (number of water electrolysis stacks 101). That is, the DC power supply 141 applies a higher voltage as the number of water electrolysis stacks 101 increases. When the auxiliary machine such as the water supply piping 131, the hydrogen gas piping 132, and the oxygen gas piping 133 is made of a conductive material, the water electrolysis stack 101 is electrically connected to the water tank 104, the hydrogen gas tank 102, the oxygen gas/water separation tank 103, the water feeding pump 111, the flow rate adjustment valve 112, and the like. Since there is a possibility that a person touches the water tank 104, the hydrogen gas tank 102, the oxygen gas/water separation tank 103, the water feeding pump 111, the flow rate adjustment valve 112, and the like, the ground potential is desirably set. In addition, the water supply piping 131, the hydrogen gas piping 132, and the oxygen gas piping 133 connected to the water tank 104, the hydrogen gas tank 102, the oxygen gas/water separation tank 103, the water feeding pump 111, the flow rate adjustment valve 112 and the like also desirably have a ground potential.

For this reason, the insulating piping 1a and 1b having insulation performance according to the applied voltage are required between the water electrolysis stack 101 to which the high voltage is applied and the auxiliary machine which is the ground potential. As specifications of the insulating piping 1a and 1b applied to the water electrolysis system Z, the following conditions can be considered.
(A1) To withstand high temperatures of about 60 to 90°C as the water electrolysis stack 101 generates heat.
(A2) To have a pressure resistance greater than or equal to a water pressure of water flowing inside the insulating piping 1a, 1b or a pressure of gas (gas pressure) .
(A3) To have low hydrogen gas permeability, oxygen gas permeability, and water permeability.
(A4) To have electrical dielectric strength when a high voltage is applied.

### [Insulating piping 1a and determination device 2]

FIG. 2 is a schematic configuration diagram of the insulating piping 1a according to the present embodiment. FIG. 1 is referred to as appropriate.

The insulating piping 1a includes an inner tube 130, an insulating tube 11, and an outer tube 12. The inner tube 130 is a hydrogen gas piping 132 and an oxygen gas piping 133 shown in FIG. 1, and the inner tube inner gas G flows through the inside. The inner tube inner gas G is hydrogen gas G1 or oxygen gas G2 (predetermined gas). That is, the inner tube 130 connects the water electrolysis stack 101 and an auxiliary machine, and fluid flows inside. Note that it is assumed that a conductive material such as SUS is used as the inner tube 130. Furthermore, a white arrow in FIG. 2 indicates a flowing direction of the inner tube inner gas G.

The inner tube 130 is divided into two parts at a place where the insulating tube 11 is disposed. The insulating tube 11 is a joint connecting the inner tubes 130a and 130b divided into two parts, and has an insulating property. In FIG. 2, it is assumed that the inner tube 130a is connected to the water electrolysis stack 101. Thus, the insulating tube 11 ensures insulation between the inner tubes 130a and 130b divided into two parts. In this manner, the water electrolysis stack 101 and the auxiliary machine are insulated in the inner tube 130 by the insulating tube 11.

As illustrated in FIG. 2, the outer tube 12 is provided so as to cover the insulating tube 11 and a part of the inner tube 130. An outer tube inner space (space) 14, which is a predetermined space, is provided between the outer tube 12, and the inner tube 130 and the insulating tube 11. In this manner, the outer tube 12 is provided on the outer side of the inner tube 130 via the inner tube 130 and the outer tube inner space 14. That is, in the insulating piping 1a, a double tube is formed by the outer tube 12 and the inner tube 130.

The dry gas 13 (predetermined gas) is enclosed in the outer tube inner space 14. The dry gas 13 contains nitrogen gas, air, or the like that has insulating properties (conductivity is less than or equal to a predetermined value), and has humidity of less than or equal to a predetermined value. The humidity being less than or equal to the predetermined value means humidity of an extent dew condensation does not occur under the usage environment of the insulating piping 1.

The insulating tube 11 is made of a material that is not conductive (has insulating properties) and is not permeable to the inner tube inner gas G (hydrogen gas G1 and oxygen gas G2) or is not brittle. For example, the insulating tube 11 is made of ceramics, FRP with a plastic lining, resin such as polyethylene, or rubber. Furthermore, the outer tube 12 is made of a material having an insulating property such as FRP or polyethylene. That is, a material having a conductivity of less than or equal to a predetermined value is used for the insulating tube 11 and the outer tube 12. Since the outer tube 12 does not constantly come into contact with the inner tube inner gas G, it is not necessary to examine permeability and brittleness with respect to the inner tube inner gas G.

When a high voltage is applied to the water electrolysis stack 101 (see FIG. 1), the inner tube 130a connected to the side of the water electrolysis stack 101 will have the same potential as the water electrolysis stack 101. Then, a potential difference is generated at both ends of the insulating tube 11, and a DC electric field is generated by the potential difference. If the insulating tube 11 is exposed, the generated electric field causes the surface of the insulating tube 11 to attract dust and dirt. As a result, the surface of the insulating tube 11 may get contaminated or the surface of the insulating tube 11 may get wet by moisture in the atmosphere with long-term operation. When such an event occurs, the insulation performance of the insulating tube 11 may be deteriorated.

Therefore, in the present embodiment, the periphery of the insulating tube 11 is covered with the outer tube 12, and the dry gas 13 is enclosed in the outer tube inner space 14. In this way, it is possible to prevent the insulation performance of the surface of the insulating tube 11 from deteriorating due to a change in the usage environment.

The magnitude relationship of the dry gas 13, the inner tube inner gas G, and the gas pressure of the atmosphere is set such that (dry gas 13) > (inner tube inner gas G) > (atmosphere). As described above, in the present embodiment, the dry gas 13 is enclosed so that the gas pressure of the dry gas 13 becomes a pressure higher than the gas pressure of the inner tube inner gas G (the pressure of the fluid flowing inside the inner tube 130) and the atmospheric pressure. When the connecting portion 15 between the inner tube 130 and the insulating tube 11 or the insulating tube 11 is damaged, the inner tube inner gas G flowing in the inner tube 130 can be prevented from immediately flowing out to the outer tube inner space 14 by the gas pressure of the dry gas 13. At this time, by reducing the difference between the gas pressure of the dry gas 13 and the gas pressure of the inner tube inner gas G, it is possible to extend the time during which the dry gas 13 flows out to the inside of the inner tube 130 while preventing the inner tube inner gas G from flowing out to the outer tube inner space 14. That is, it is possible to delay the time during which the dry gas 13 is replaced by the inner tube inner gas G in the outer tube inner space 14.

In addition, since the peripheries of the insulating tube 11 and the inner tube 130 are covered by the outer tube 12, it is possible to prevent the inner tube inner gas G from leaking to the periphery. In this manner, it is possible to prevent the flammable inner tube inner gas G (hydrogen gas G1 and oxygen gas G2) from leaking to the outside of the inner tube 130.

The insulating piping 1a according to the present embodiment illustrated in FIG. 2 is provided with a pressure sensor 31 and a gas concentration meter 32 in order to detect damage to the insulating piping 1a. A pressure sensor 31 which is a state detection unit and a gas pressure measurement unit is provided to the outer tube 12. Then, the pressure sensor 31 measures the pressure (gas pressure) of the dry gas 13 enclosed in the outer tube inner space 14 (detects the state of the dry gas 13). The gas concentration meter 32 is provided to the inner tube 130 downstream of the insulating piping 1a, and measures the concentration of gas flowing inside the inner tube 130. In other words, the installation place of the gas concentration meter 32 is the inner tube 130 downstream of the installation place of the outer tube 12. The gas whose concentration is to be measured by the gas concentration meter 32 is the inner tube inner gas G or the dry gas 13. In other words, the gas concentration meter 32 measures the concentration of the inner tube inner gas G flowing inside the inner tube 130 or measures the concentration of the dry gas 13. The type of the gas concentration meter 32 is selected according to the gas to be subjected to concentration measurement. Note that the downstream means downstream with respect to the flow of the inner tube inner gas G.

Note that in FIG. 2, the gas concentration meter 32 is assumed to be installed in the hydrogen gas branch tube 132b or the oxygen gas branch tube 133b illustrated in FIG. 1. However, it merely needs to be installed downstream of the insulating tube 11, and it may be installed in the hydrogen gas main tube 132a or the oxygen gas main tube 133a illustrated in FIG. 1. The gas concentration meter 32 may be installed inside the insulating piping 1a as long as it is downstream of the insulating tube 11.

The pressure sensor 31 and the gas concentration meter 32 are connected to the determination device 2, and measurement results by the pressure sensor 31 and the gas concentration meter 32 are transmitted to the determination device 2.

The determination device 2 acquires the gas pressure (state) of the dry gas 13 detected by the pressure sensor 31 and the concentration of the gas measured by the gas concentration meter 32. Then, based on these pieces of information, the determination device 2 detects that the insulating piping 1a is damaged and specifies the damaged place.

As illustrated in FIG. 2, the determination device 2 includes an information acquisition unit 21, a pressure determination unit 22, a concentration determination unit 23, and a determination processing unit 24.

The information acquisition unit 21 acquires pressure information transmitted from the pressure sensor 31 and concentration information transmitted from the gas concentration meter 32.

The pressure determination unit 22 determines whether or not the pressure information transmitted from the pressure sensor 31 has a peculiar change.

The concentration determination unit 23 determines whether or not the concentration information transmitted from the gas concentration meter 32 has a peculiar change.

As a result of the determination by the pressure determination unit 22 and the concentration determination unit 23, the presence or absence of the damage in the insulating piping 1 and the damaged place when the damage occurs in the insulating piping 1 are specified.

Then, the determination processing unit 24 transmits damage information including the presence or absence of damage and the specified damaged place to the control device 3.

Note that details of processes performed by the information acquisition unit 21, the pressure determination unit 22, the concentration determination unit 23, and the determination processing unit 24 will be described later.

### [Hardware Configuration of Determination Device 2]

FIG. 3 is a diagram illustrating a hardware configuration of the determination device 2. FIGS. 1 and 2 are appropriately referred to.

The determination device 2 is a personal computer (PC) or the like, and includes an arithmetic device 202 including a memory 201, a central processing unit (CPU), a graphic processing unit (GPU), or the like. In addition, the determination device 2 includes a storage device 203 including a hard disk (HD), a solid state drive (SSD), or the like. The determination device 2 includes a communication device 204 that collects information from the pressure sensor 31 and the gas concentration meter 32, and transmits a result of the determination performed by the determination device 2 to the control device 3 as damage information. Furthermore, the determination device 2 includes an input device 205 such as a keyboard and a mouse, and an output device 206 such as a display.

The storage device 203 stores a program, and this program is loaded in the memory 201. Then, the loaded program is executed by the arithmetic device 202. As a result, the information acquisition unit 21, the pressure determination unit 22, the concentration determination unit 23, and the determination processing unit 24 illustrated in FIG. 2 are embodied.

### [Method for Determining Damage on Insulating Piping 1a]

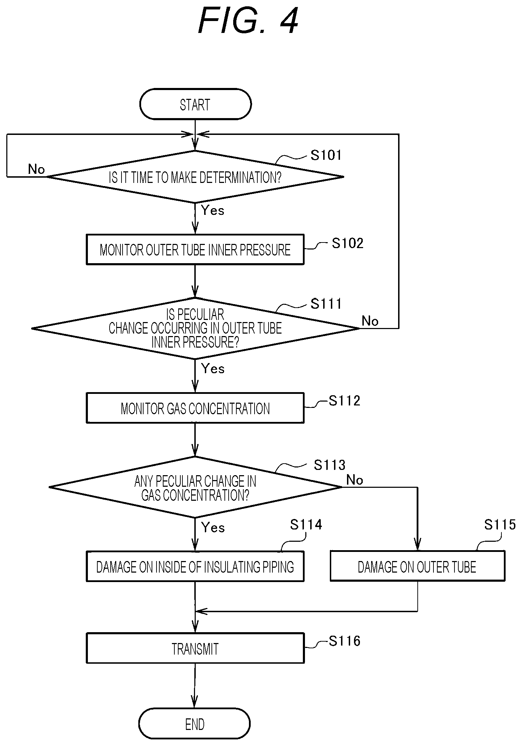

FIG. 4 is a flowchart illustrating a procedure of a piping damage detection method on the insulating piping 1a performed in the present embodiment. FIGS. 1 and 2 are appropriately referred to.

First, the information acquisition unit 21 determines whether or not the current time is a time to make a determination (S101). The time to make a determination is set at intervals of several seconds.

When the current time is not the time to make a determination (S101 → No), the determination device 2 returns the process to step S101.

When the current time is the time to make a determination (S101 → Yes), the pressure determination unit 22 monitors the internal pressure of the outer tube 12 (outer tube inner pressure) by the pressure sensor 31 (S102). That is, the pressure determination unit 22 collects information (pressure information) on the pressure (outer tube inner pressure) of the dry gas 13 measured by the pressure sensor 31 for a predetermined time. Step S102 is an in-outer tube state information acquisition step in which the pressure determination unit 22 acquires information regarding the state of the inside of the outer tube 12 from the pressure sensor 31.

Then, based on the collected pressure information, the pressure determination unit 22 determines whether or not a peculiar change has occurred in the outer tube inner pressure (S111). As a peculiar change in the outer tube inner pressure, in particular, a decrease in the outer tube inner pressure is determined. Specifically, in step S111, the pressure determination unit 22 determines whether or not the pressure of the dry gas 13 measured by the pressure sensor 31 is less than a predetermined value. That is, in step S111, the pressure determination unit 22 determines whether or not the outer tube inner pressure has decreased by greater than or equal to a predetermined value based on the time-series of the acquired outer tube inner pressure. When the inner pressure of the outer tube 12 is decreased, there is a high possibility that the insulating tube 11, the connecting portion 15, or the outer tube 12 is damaged. As described above, the magnitude relationship among the dry gas 13, the inner tube inner gas G, and the gas pressure of the atmosphere is set to (dry gas 13) > (inner tube inner gas G) > (atmospheric pressure). Therefore, the decrease in the outer tube inner pressure indicates that the dry gas 13 flows out into the inner tube 130 due to the damage on the insulating tube 11 or the connecting portion 15, or the dry gas 13 flows out to the atmosphere side due to the damage on the outer tube 12.

When there is no peculiar change in the outer tube inner pressure (S111 → No), the determination device 2 returns the process to step S101.

When there is a peculiar change in the outer tube inner pressure (S111 → Yes), the concentration determination unit 23 monitors the gas concentration by the gas concentration meter 32 (S112). In step S112, the concentration determination unit 23 collects the gas concentration of the dry gas 13 or the inner tube inner gas G measured by the gas concentration meter 32 installed in the inner tube 130 for a predetermined time. Step S112 is a gas concentration acquisition step in which the concentration determination unit 23 acquires the concentration of gas inside the inner tube 130 from the gas concentration meter 32.

Then, the concentration determination unit 23 determines whether or not there is a peculiar change in gas concentration from the start of the monitoring of the outer tube inner pressure (S113). As a peculiar change in the outer tube inner pressure, a decrease in the inner tube inner gas concentration and an increase in the dry gas concentration (concentration ratio) are particularly determined. Specifically, in step S113, the concentration determination unit 23 determines whether or not the concentration of the gas measured by the gas concentration meter 32 satisfies a predetermined condition.

Therefore, in a case where there is a peculiar change in gas concentration in step S113 (S113 → Yes; when the predetermined condition is satisfied), the determination processing unit 24 determines that the inside of the insulating piping 1a (the inside of the outer tube 12) is damaged (S114). In a case where the gas concentration meter 32 measures the concentration of the inner tube inner gas G, and in a case where the concentration of the inner tube inner gas G measured by the gas concentration meter 32 is less than or equal to a predetermined value, "Yes" is determined in step S113 (it is determined that the predetermined condition is satisfied). When the gas concentration meter 32 measures the concentration of the dry gas 13 and when the concentration of the dry gas 13 measured by the gas concentration meter 32 is greater than or equal to a predetermined value, "Yes" is determined in step S113 (it is determined that the predetermined condition is satisfied). The damage inside the insulating piping 1a is at least one of the insulating tube 11 and the connecting portion 15.

In addition, in a case where there is no peculiar conversion in the concentration of the inner tube inner gas in step S113 (S113 → No; When the predetermined condition is not satisfied), the determination processing unit 24 determines that the outer tube 12 is damaged (S115). In a case where the gas concentration meter 32 measures the concentration of the inner tube inner gas G, when the concentration of the inner tube inner gas G measured by the gas concentration meter 32 is greater than a predetermined value, "No" is determined in step S113. Furthermore, in a case where the gas concentration meter 32 measures the concentration of the dry gas 13, when the concentration of the dry gas 13 measured by the gas concentration meter 32 is less than a predetermined value, "No" is determined in step S113.

For example, when the gas concentration meter 32 measures the concentration of the inner tube inner gas G, a decrease in the concentration (decrease in the concentration ratio) of the inner tube inner gas G flowing through the inner tube 130 indicates that the dry gas 13 is flowing into the inner tube 130. Furthermore, when the gas concentration meter 32 is measuring the concentration of the dry gas 13, an increase in the concentration (increase in the concentration ratio) of the dry gas 13 inside the inner tube 130 indicates that the dry gas 13 is flowing into the inner tube 130. That is, when the insulating tube 11 of the insulating piping 1a or the connecting portion 15 is damaged, the dry gas 13 flows into the inner tube 130, and decrease in the concentration of the inner tube inner gas G or increase in the concentration of the dry gas 13 occurs. On the other hand, although "Yes" is determined in step S111, it may be determined that there is no change in the gas concentration measured by the gas concentration meter 32 ("No" in S113). This case indicates that the inner pressure of the outer tube 12 decreases although the dry gas 13 does not flow into the inner tube 130. In such a case, there is a high possibility that the outer tube 12 is damaged.

Steps S111 and S113 to S115 are damage detection steps in which the determination device 2 detects that the insulating piping 1a is damaged and specifies a place of the damage based on the state of the dry gas 13 detected by the pressure sensor 31 and the concentration of the gas measured by the gas concentration meter 32.

Then, the determination processing unit 24 transmits the determination results in step S114 and step S115 to the control device 3 as damage information (S116). The control device 3 performs complete stop or partial stop of the water electrolysis device 100 based on the received damage information. In step S116, the determination processing unit 24 outputs information (damage information) indicating the occurrence of the damage and the place of the damage. The process in step S116 is a damage information output step.

### [Modified example]

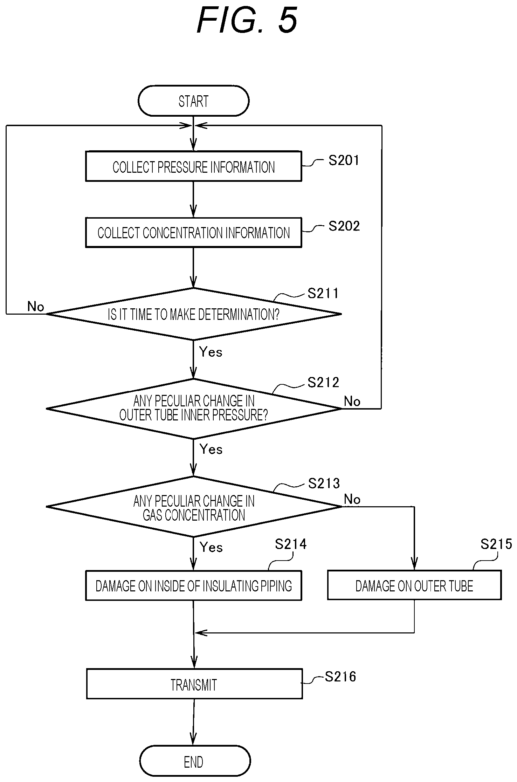

FIG. 5 is a flowchart illustrating another procedure of the piping damage detection method on the insulating piping 1a performed in the present embodiment. FIG. 2 is appropriately referred to.

The information acquisition unit 21 collects pressure information of the dry air from the pressure sensor 31 (S201), and also collects concentration information, which is information on the concentration of gas, from the gas concentration meter 32 (S202). Step S201 is an in-outer tube state information acquisition step in which the information acquisition unit 21 acquires information regarding the state of the inside of the outer tube 12 from the pressure sensor 31. Furthermore, step S202 is a gas concentration acquisition step in which the information acquisition unit 21 acquires the concentration of gas inside the inner tube 130 from the gas concentration meter 32.

Next, the pressure determination unit 22 determines whether or not the current time is the time to make a determination (S211). The time to make a determination is set at intervals of several seconds.

When the current time is not the time to make a determination (S211 → No), the determination device 2 returns the process to step S201.

When the current time is the time to make a determination (S211 → Yes), the pressure determination unit 22 determines whether or not there is a peculiar change in the inner pressure of the outer tube 12 (outer tube inner pressure), that is, the gas pressure of the dry gas 13 (S212). In step S212, as a peculiar change in the outer tube inner pressure, in particular, a decrease in the outer tube inner pressure is determined. Specifically, in step S212, the pressure determination unit 22 determines whether or not the pressure of the dry gas 13 measured by the pressure sensor 31 is less than a predetermined value. Since the process in step S212 is similar to the process in step S111 in FIG. 4, detailed description of step S212 will be omitted.

When there is no peculiar change in the outer tube inner pressure (S212 → No), the determination device 2 returns the process to step S201.

When there is a peculiar change in the outer tube inner pressure (S212 → Yes), the concentration determination unit 23 determines whether or not there is a peculiar change in the gas concentration measured by the gas concentration meter 32 (S213). Since the process in step S213 is similar to the process in step S113 in FIG. 4, detailed description of the process in step S213 will be omitted. Specifically, in step S213, the concentration determination unit 23 determines whether or not the concentration of the gas measured by the gas concentration meter 32 satisfies a predetermined condition.

Therefore, in a case where there is a peculiar change in gas concentration in step S213 (S213 → Yes; when the predetermined condition is satisfied), the determination processing unit 24 determines that the inside of the insulating piping 1a (the inside of the outer tube 12) is damaged (S214). The damage inside the insulating piping 1a is at least one of the insulating tube 11 and the connecting portion 15.

In addition, in a case where there is no peculiar conversion in gas concentration in step S213 (S213 → No; when the predetermined condition is not satisfied), the determination processing unit 24 determines that the outer tube 12 is damaged (S215).

Steps S212 to S215 are damage detection steps in which the determination device 2 detects that the insulating piping 1a is damaged and specifies a place of the damage based on the state of the dry gas 13 detected by the pressure sensor 31 and the concentration of the gas measured by the gas concentration meter 32.

Then, the determination processing unit 24 transmits the determination results in step S214 and step S215 to the control device 3 as damage information (S216). The control device 3 performs complete stop or partial stop of the water electrolysis device 100 based on the received damage information. In step S216, the determination processing unit 24 outputs information (damage information) indicating the occurrence of the damage and the place of the damage. The process in step S216 is a damage information output step.

Incidentally, the possibility that the outer tube 12 and the insulating tube 11 (or the connecting portion 15) will be simultaneously damaged is low. Therefore, in the flowcharts illustrated in FIGS. 4 and 5, the process when the outer tube 12 and the insulating tube 11 (or the connecting portion 15) are simultaneously damaged is omitted.

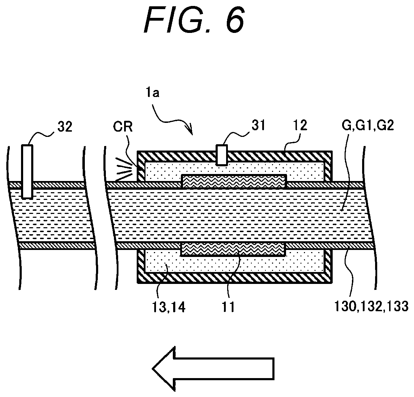

Next, with reference to FIGS. 6 to 9B, an example of a time-series graph of the pressure and the gas concentration for a case where the outer tube 12 is damaged and for a case where the insulating tube 11 is damaged will be described. Then, processes in steps S102 to S115 in FIG. 4 and processes in steps S212 to S215 in FIG. 5 will be described in detail.

### [Case where outer tube 12 is damaged]

First, a case where the outer tube 12 is damaged will be described with reference to FIGS. 6 to 7B. FIGS. 6 to 7B correspond to the processes of step S102 → S111 "Yes" → S112 → S113 "No" → S115 in FIG. 4 or the processes of step S212 "Yes" → S213 "No" → S215 in FIG. 5.

FIG. 6 is a diagram illustrating a state in which the outer tube 12 of the insulating piping 1a is damaged.

FIG. 6 illustrates a case where a gas leakage point CR occurs in the outer tube 12 of the insulating piping 1a. In such a case, the dry gas 13 enclosed inside the outer tube 12 has a higher pressure than the atmosphere outside the outer tube 12, and thus the dry gas 13 leaks toward the atmosphere. That is, in the pressure sensor 31 provided to the outer tube 12, a decrease in the gas pressure of the dry gas 13 is observed due to the damage on the outer tube 12. In addition, since the insulating tube 11 and the connecting portion 15 are not damaged, there is no change in concentration of the inner tube inner gas G flowing inside the inner tube 130. Therefore, a change in concentration of the gas (inner tube inner gas G and dry gas 13) measured by the gas concentration meter 32 provided on the downstream side of the insulating piping 1a is not observed.

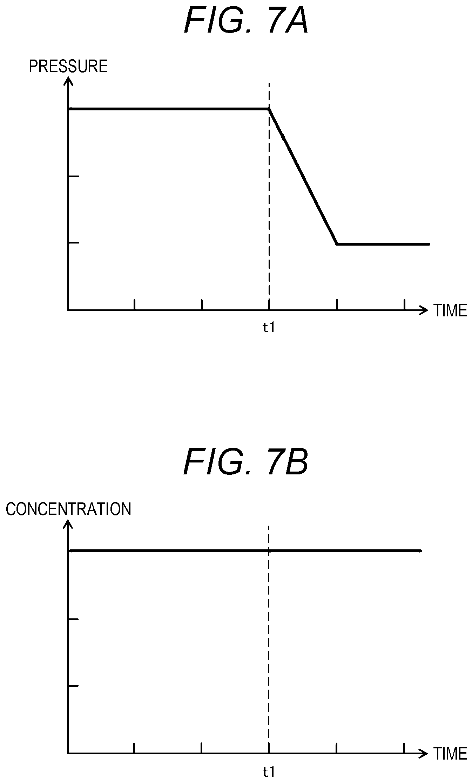

Next, with reference to FIGS. 7A and 7B, a change in outer tube inner pressure and a change in concentration in the inner tube 130 when the outer tube 12 is damaged will be described.

FIG. 7A is a diagram illustrating a time-series of the outer tube inner pressure measured by the pressure sensor 31, and FIG. 7B is a diagram illustrating a time-series of the concentration of the gas measured by the gas concentration meter 32. In FIG. 7B, the gas measured by the gas concentration meter 32 may be the inner tube inner gas G or the dry gas 13.

In FIGS. 7A and 7B, time t1 indicates a damage time of the outer tube 12.

As illustrated in FIG. 7A, the measured outer tube inner pressure (gas pressure of the dry gas 13) decreases from the damage time of the outer tube 12 (time t1). On the other hand, as illustrated in FIG. 7B, time-series data in which the concentration of the gas measured by the gas concentration meter 32 does not change is obtained.

The states illustrated in FIGS. 7A and 7B correspond to a case where the pressure of the dry gas 13 is less than a predetermined value and the concentration of the gas measured by the gas concentration meter 32 does not satisfy a predetermined condition. In such a case, the determination device 2 determines that the outer tube 12 is damaged.

### [Case where insulating tube 11 is damaged]

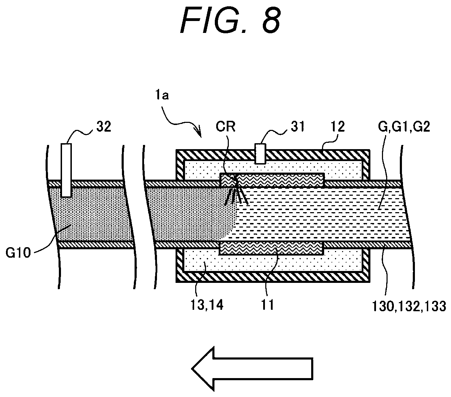

Next, a case where the insulating tube 11 is damaged will be described with reference to FIGS. 8 to 9C. FIGS. 8 to 9C correspond to the processes of step S102 → S111 "Yes" → S112 → S113 "Yes" → S114 in FIG. 4 or the processes of step S212 "Yes" → S213 "Yes" → S214 in FIG. 5.

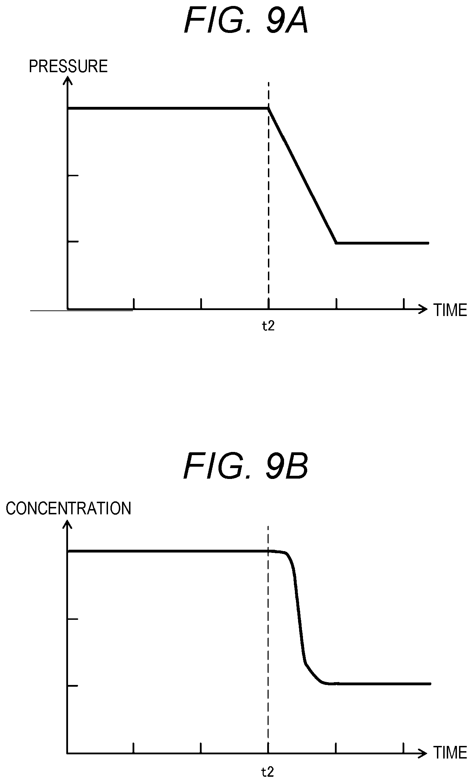

Next, a case where the insulating tube 11 of the insulating piping 1a is damaged will be described with reference to FIGS. 8, 9A, and 9B.

FIG. 8 is a diagram illustrating a state in which the insulating tube 11 is damaged. In FIG. 8, the same configurations as those in FIG. 2 are denoted by the same reference numerals, and the description thereof will be omitted.

As illustrated in FIG. 8, when the gas leakage point CR occurs in the insulating tube 11 of the insulating piping 1a, the dry gas 13 enclosed in the outer tube 12 has a higher pressure than the inner tube inner gas G, and thus leaks toward the inside of the inner tube 130. That is, in the pressure sensor 31 provided to the outer tube 12, the gas pressure is observed to decrease with the damage on the insulating tube 11. Furthermore, a mixed gas G10 of the dry gas 13 and the inner tube inner gas G flows downstream of the insulating piping 1. As a result, when the gas concentration meter 32 measures the concentration of the inner tube inner gas G, a decrease in the concentration of the inner tube inner gas G is observed in the gas concentration meter 32. Alternatively, when the gas concentration meter 32 measures the dry gas 13, an increase in the concentration of the dry gas 13 is observed in the gas concentration meter 32.

Next, with reference to FIGS. 9A to 9C, changes in the outer tube inner pressure and changes in the internal gas concentration of the inner tube 130 when the outer tube 12 and the insulating tube 11 are damaged will be described.

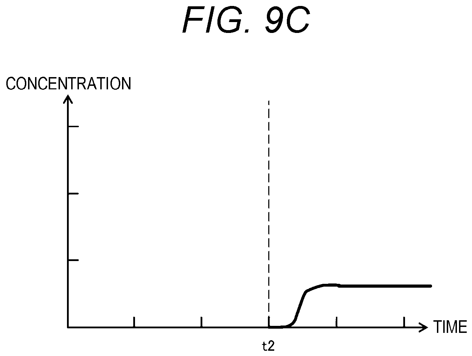

FIG. 9A is a diagram illustrating a time-series of the outer tube inner pressure measured by the pressure sensor 31, and FIGS. 9B and 9C are diagrams illustrating a time-series of the concentration of the gas measured by the gas concentration meter 32.

In FIG. 9B, the gas concentration meter 32 measures the concentration of the inner tube inner gas G, and in FIG. 9C, the gas concentration meter 32 measures the concentration of the dry gas 13. That is, FIG. 9B illustrates a change in the concentration of the inner tube inner gas G inside the inner tube 130, and FIG. 9C illustrates a change in the concentration of the dry gas 13 inside the inner tube 130.

In FIGS. 9A to 9C, time t2 indicates a damage time of insulating tube 11.

As illustrated in FIG. 9A, the outer tube inner pressure (the gas pressure of the dry gas 13) decreases from the damage time (time t2) of the insulating tube 11. As illustrated in FIG. 9B, the gas concentration of the inner tube inner gas G flowing through the inner tube 130 decreases from the damage time (time t2) of the insulating tube 11. As described above, when the insulating tube 11 is damaged, time-series data of the outer tube inner pressure and the gas concentration of the inner tube inner gas G as illustrated in FIGS. 9A and 9B can be obtained.

As described above, FIG. 9B illustrates a case where the gas concentration meter 32 measures the concentration of the inner tube inner gas G. When the gas concentration meter 32 measures the concentration of the dry gas 13, the concentration of the dry gas 13 increases from time t2 as illustrated in FIG. 9C.

FIGS. 8 to 9C correspond to a case where the pressure of the dry gas 13 is less than a predetermined value and the concentration of the gas measured by the gas concentration meter 32 satisfies a predetermined condition. In such a case, the determination device 2 determines that the inside of the outer tube 12 is damaged.

Note that, in FIGS. 8 to 9C, a case where a part of the insulating tube 11 is damaged is illustrated as an example, but the characteristics of the time-series of the outer tube inner pressure obtained even when the connecting portion 15 is damaged, the inner tube inner gas G inside the inner tube 130, and the concentration of the dry gas 13 are the same as the characteristics illustrated in FIGS. 9A to 9C.

### [Insulating piping 1b]

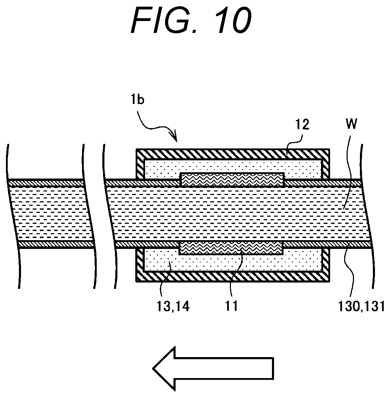

FIG. 10 is a diagram illustrating a configuration of an insulating piping 1b according to the present embodiment.

In FIG. 10, the same configurations as those in FIG. 2 are denoted by the same reference numerals, and the description thereof will be omitted.

As described with reference to FIG. 1, the insulating piping 1b is provided in the water supply piping 131. Therefore, the inner tube 130 becomes the water supply piping 131 through which the water W flows. In the insulating piping 1b illustrated in FIG. 10, the pressure sensor 31 and the gas concentration meter 32 illustrated in FIG. 2 are omitted. Furthermore, the dry gas 13 filled in the outer tube inner space 14 is enclosed at a gas pressure greater than or equal to the pressure of the water W flowing through the inner tube 130 (water supply piping 131).

By providing such an insulating piping 1b in the water supply piping 131, it becomes possible to insulate an auxiliary machine (water feeding pump 111, hydrogen gas tank 102, oxygen gas/water separation tank 103, etc.) via the inner tube 130. Incidentally, since the water W flowing through the water supply piping 131 is pure water, the conductivity is low. Therefore, conduction of the auxiliary machine by the water W flowing through the inner tube 130 (water supply piping 131) does not need to be considered.

As described above, according to the present embodiment, since the periphery of the insulating tube 11 is covered with the outer tube 12, the influence of humidity and dust on the outer surface of the insulating tube 11 can be reduced. Furthermore, since the dry gas 13 is enclosed in the outer tube inner space 14, the influence of humidity on the outer surface of the insulating tube 11 can be reduced. With such a configuration, the insulating piping 1a and 1b according to the present embodiment can easily realize insulation in the water supply piping 131, the hydrogen gas piping 132, and the oxygen gas piping 133.

Prevention of contamination of the insulating tube 11 is either a method of controlling with an air conditioner or an air purifier, or a configuration of enclosing the dry gas 13 managed as in the present embodiment. Regarding the method of controlling with the air conditioner or the air purifier, the running cost increases because the operation environment of the water electrolysis stack 101 is large-scale and high temperature and high humidity environment. According to the insulating piping 1a and 1b of the present embodiment, prevention of contamination of the insulating tube 11 can be realized without introducing an air conditioner or an air purifier. Therefore, according to the insulating piping 1a and 1b of the present embodiment, in addition to the periphery of the insulating tube 11 being covered with the outer tube 12, contamination of the insulating tube 11 can be prevented without increasing the running cost.

Furthermore, in a case where the inner tube 130 is made of SUS or the like and has conductivity, the inner tube 130 needs to be made as long as possible in order to insulate the water electrolysis stack 101 and the auxiliary machine from each other in a state where the insulating tube 11 is not installed. Since the insulating piping 1a and 1b illustrated in the present embodiment are provided to the inner tube 130, it is possible to insulate the water electrolysis stack 101 from the auxiliary machine without increasing the length of the inner tube 130.

In addition, the dry gas 13 is enclosed in the outer tube inner space 14 such that the outer tube inner pressure (gas pressure of the dry gas 13) becomes higher than the gas pressure of the inner tube inner gas G flowing through the inner tube 130. As a result, even if the insulating tube 11 or the connecting portion 15 is damaged, leakage of the inner tube inner gas G to the outside can be suppressed.

A pressure sensor 31 and a gas concentration meter 32 are installed in the insulating piping 1a.

Then, the determination device 2 analyzes pressure information transmitted from the pressure sensor 31 and concentration information transmitted from the gas concentration meter 32 provided downstream of the insulating tube 11. As a result, the damage on the insulating piping 1a can be detected and the damaged site can be easily estimated. The determination processing unit 24 of the determination device 2 transmits the damage information to the control device 3 of the water electrolysis system Z (see FIG. 1). The control device 3 that has received the damage information partially or entirely stops the operation of the water electrolysis system Z. In this manner, the determination by the determination device 2 can be utilized for control of the water electrolysis system Z. Determination of the partial stop and the entire stop of the operation of the water electrolysis system Z is determined according to the installation place and the damaged site of the insulating piping 1a. By using the damage detection method of the insulating piping 1a described in the present embodiment, an installation place and a damaged site of the insulating piping 1a can be detected, and thus, it can also be utilized for operation determination of the water electrolysis system Z.

As described above, in the present embodiment, the gas pressure of the dry gas 13 enclosed in the outer tube inner space 14, and the gas concentration of the inner tube inner gas G flowing inside the inner tube 130 and the dry gas 13 are monitored. As a result, the occurrence of the damage on the insulating piping 1a and the damaged site can be easily detected.

Due to these effects, in the present embodiment, it is possible to improve the robustness of the insulating piping 1a and 1b and the inner tube 130.

In addition, a humidity sensor may be provided instead of the pressure sensor 31 illustrated in FIG. 2. The hydrogen gas G1 and the oxygen gas G2 generated by water electrolysis have a characteristic of having high humidity. Therefore, when the gas leakage point CR as illustrated in FIG. 8 occurs, the humidity of the dry gas 13 increases as the inner tube inner gas G leaks into the outer tube inner space 14. Furthermore, the humidity of the dry gas 13 is set to be lower than the humidity of the atmosphere. Therefore, even when the outer tube 12 is damaged as illustrated in FIG. 8, the humidity of the dry gas 13 increases. As described above, instead of the gas pressure of the dry gas 13, an increase in humidity of the dry gas 13 may be detected.

When a humidity sensor is provided instead of the pressure sensor 31, the determination device 2 determines whether or not the humidity of the dry gas 13 has increased in step S111 of FIG. 4 or step S212 of FIG. 5.

Alternatively, the pressure sensor 31 and the humidity sensor may be installed in the outer tube 12. In such a case, both the gas pressure and the humidity of the outer tube inner space 14 are measured.

The insulating piping 1a and 1b may connect the inner tube 130 (water supply piping 131, hydrogen gas piping 132, oxygen gas piping 133) as a female joint or a male joint.

Furthermore, as illustrated in FIG. 1, the insulating piping 1a is installed in the hydrogen gas branch tube 132b and the oxygen gas branch tube 133b, but may be installed in the hydrogen gas main tube 132a or the oxygen gas main tube 133a. Similarly, the insulating piping 1b is installed in the water supply branch tube 131b, but may be installed in the water supply main tube 131a.

The present invention is not limited to the above-described embodiments, and includes various modified examples. For example, the above-described embodiments have been described in detail for easy understanding of the present invention, and are not necessarily limited to those having all the described configurations.

In addition, some or all of the above-described configurations, functions, units 21 to 24, storage device 203, and the like may be realized by hardware, for example, by designing with an integrated circuit. In addition, as illustrated in FIG. 3, each of the above-described configurations, functions, and the like may be realized by software by a processor such as a CPU interpreting and executing a program for realizing each function. Information such as a program, a table, and a file for realizing each function can be stored not only in a hard disk (HD) but also in a recording device such as a memory or a solid state drive (SSD) or a recording medium such as an integrated circuit (IC) card, a secure digital (SD) card, or a digital versatile disc (DVD).

In addition, in each embodiment, control lines and information lines considered to be necessary for description are illustrated, and not all control lines and information lines in a product are necessarily illustrated. In practice, it may be considered that almost all the configurations are connected to each other.

### Reference Signs List

1a, 1b insulating piping
2 determination device
3 control device
11 insulating tube
12 outer tube
13 dry gas (predetermined gas)
14 outer tube inner space
15 connecting portion
21 information acquisition unit
22 pressure determination unit
23 concentration determination unit
24 determination processing unit
31 pressure sensor (state detection unit, gas pressure measurement unit)
32 gas concentration meter (gas concentration measurement unit)
100 water electrolysis device
101 water electrolysis stack
102 hydrogen gas tank (auxiliary machine)
103 oxygen gas/water separation tank (oxygen gas tank, auxiliary machine)
104 water tank (auxiliary machine)
131 water supply piping
132 hydrogen gas piping
133 oxygen gas piping
141 DC power supply
130, 130a, 130b inner tube
G inner tube inner gas (predetermined gas)
G1 hydrogen gas (predetermined gas)
G2 oxygen gas (predetermined gas)
G10 mixed gas
W water
Z water electrolysis system
S101 monitor outer tube inner pressure (in-outer tube state information acquisition step)
S111 whether or not peculiar change occurred in outer tube inner pressure (damage detection step)
S112 monitor gas concentration (gas concentration acquisition step)
S113 whether or not there is peculiar change in gas concentration (damage detection step)
S114 damage inside insulating piping (damage detection step) S115 damage on outer tube (damage detection step)
S116 transmit (damage information output step)
S201 collect pressure information (in-outer tube state information acquisition step)
S202 collect concentration information (gas concentration acquisition step)
S212 whether or not peculiar change occurred in outer tube inner pressure (damage detection step)
S213 whether or not there is peculiar change in gas concentration (damage detection step)
S214 damage inside insulating piping (damage detection step)
S215 damage on outer tube (damage detection step)
S216 transmit (damage information output step)

## Claims

1. An insulating piping configured by a double tube including:
an inner tube that connects a water electrolysis stack and an auxiliary machine and through which a fluid flows; and
an outer tube provided on an outer side of the inner tube with a space interposed between the outer tube and the inner tube,
wherein the outer tube has an insulating property,
the water electrolysis stack and the auxiliary machine are insulated from each other in the inner tube, and
a dry gas having a humidity of less than or equal to a predetermined value is enclosed, in an outer tube inner space that is the space, at a pressure of the fluid flowing inside the inner tube and a pressure higher than an atmospheric pressure.

2. The insulating piping according to claim 1, wherein
the inner tube is divided into two parts, and
an insulating tube that is a joint connecting the inner tube divided into two parts, and has an insulating property is provided.

3. The insulating piping according to claim 2, wherein
the fluid is a predetermined gas,
a state detection unit that detects a state of the dry gas is provided to the outer tube, and
a gas concentration measurement unit that measures a concentration of the predetermined gas is provided to the inner tube downstream of an installation place of the insulating tube.

4. The insulating piping according to claim 3, wherein the state detection unit is a gas pressure measurement unit that measures a pressure of the dry gas enclosed in the outer tube inner space.

5. The insulating piping according to claim 3, wherein
hydrogen gas or oxygen gas flows through the inner tube, and
the gas concentration measurement unit measures a concentration of the hydrogen gas or the oxygen gas flowing through the inner tube.

6. The insulating piping according to claim 3, wherein the gas concentration measurement unit measures a concentration of the dry gas.

7. The insulating piping according to claim 2, wherein the dry gas contains nitrogen gas or air.

8. The insulating piping according to claim 3, wherein the insulating tube is made of ceramics, resin, or rubber.

9. A water electrolysis system comprising:
a water tank storing water;
a plurality of water electrolysis stacks that perform water electrolysis;
a hydrogen gas tank that stores hydrogen gas generated as a result of the electrolysis;
an oxygen gas tank that stores oxygen gas generated as a result of the electrolysis;
a DC power supply that applies DC voltage to each of the water electrolysis stacks;
a determination device;
a water supply piping that connects the water tank and the water electrolysis stack and through which the water flows;
a hydrogen gas piping that connects the water electrolysis stack and the hydrogen gas tank and through which the hydrogen gas flows; and
an oxygen gas piping that connects the water electrolysis stack and the oxygen gas tank and through which the oxygen gas flows,
at least the hydrogen gas piping and the oxygen gas piping being provided with an insulating piping,
wherein the insulating piping is configured by a double tube including:
an inner tube that is the hydrogen gas piping or the oxygen gas piping; and
an outer tube provided on an outer side of the inner tube with a space interposed between the outer tube and the inner tube,
the outer tube has an insulating property, and the inner tube is divided into two parts,
an insulating tube that is a joint connecting the inner tube divided into two parts, and has an insulating property is provided,
dry gas having a humidity of less than or equal to a predetermined value is enclosed in an outer tube inner space that is the space, at a pressure of gas flowing inside the inner tube and a pressure higher than an atmospheric pressure,
a state detection unit that detects a state of the dry gas is provided to the outer tube, and a gas concentration measurement unit that measures a concentration of the gas flowing inside the inner tube is provided to the inner tube downstream of an installation place of the insulating tube, and
the determination device detects that the insulating piping is damaged and specifies a place of damage, based on a state of the dry gas detected by the state detection unit and the concentration of the gas measured by the gas concentration measurement unit.

10. The water electrolysis system according to claim 9, wherein
the state detection unit is a gas pressure measurement unit that measures a pressure of the dry gas enclosed in the outer tube inner space, and
the determination device
determines whether or not the pressure of the dry gas measured by the gas pressure measurement unit is less than a predetermined value, and determines whether or not the concentration of the gas measured by the gas concentration measurement unit satisfies a predetermined condition,
determines that the outer tube is damaged when the pressure of the dry gas is less than the predetermined value and the concentration of the gas measured by the gas concentration measurement unit does not satisfy the predetermined condition, and
determines that damage has occurred inside the outer tube when the pressure of the dry gas is less than the predetermined value and the concentration of the gas measured by the gas concentration measurement unit satisfies the predetermined condition.

11. The water electrolysis system according to claim 10, wherein
the gas concentration measurement unit measures a concentration of the hydrogen gas or the oxygen gas flowing through the inner tube, and
the determination device determines that the concentration of the gas satisfies a predetermined condition when the concentration of the hydrogen gas or the oxygen gas measured by the gas concentration measurement unit is less than or equal to a predetermined value.

12. The water electrolysis system according to claim 10, wherein
the gas concentration measurement unit measures a concentration of the dry gas, and
the determination device determines that the concentration of the gas satisfies the predetermined condition when the concentration of the dry gas measured by the gas concentration measurement unit is greater than or equal to a predetermined value.

13. The water electrolysis system according to claim 9, wherein the determination device outputs information on occurrence of the damage and a place of the damage.

14. A piping damage detection method executed by a determination device of a water electrolysis system including:
a water tank storing water;
a plurality of water electrolysis stacks that perform water electrolysis;
a hydrogen gas tank that stores hydrogen gas generated as a result of the water electrolysis;
an oxygen gas tank that stores oxygen gas generated as a result of the water electrolysis;
a DC power supply that applies DC voltage to each of the water electrolysis stacks;
a determination device;
a water supply piping that connects the water tank and the water electrolysis stack and through which the water flows;
a hydrogen gas piping that connects the water electrolysis stack and the hydrogen gas tank and through which the hydrogen gas flows; and
an oxygen gas piping that connects the water electrolysis stack and the oxygen gas tank and through which the oxygen gas flows,
at least the hydrogen gas piping and the oxygen gas piping being provided with an insulating piping,
the insulating piping being configured by a double tube including:
an inner tube that is the hydrogen gas piping or the oxygen gas piping; and
an outer tube provided on an outer side of the inner tube with a space interposed between the outer tube and the inner tube,
the outer tube having an insulating property, and the inner tube being divided into two parts,
an insulating tube that is a joint connecting the inner tube divided into two parts, and has an insulating property being provided,
dry gas having a humidity of less than or equal to a predetermined value being enclosed in an outer tube inner space that is the space at a pressure of gas flowing inside the inner tube and a pressure higher than an atmospheric pressure, and
a state detection unit that detects a state of the dry gas being provided to the outer tube, and a gas concentration measurement unit that measures a concentration of the gas being provided to the inner tube downstream of an installation place of the insulating tube,
the method comprising the steps, executed by the determination device, of:
an in-outer tube state information acquisition step of acquiring information regarding a state inside the outer tube from the state detection unit;
a gas concentration acquisition step of acquiring a concentration of the gas inside the inner tube from the gas concentration measurement unit; and
a damage detection step of detecting that damage has occurred in the insulating piping and specifying a place of the damage based on the state of the dry gas detected by the state detection unit and the concentration of the gas measured by the gas concentration measurement unit.

15. The piping damage detection method according to claim 14, wherein
the state detection unit is a gas pressure measurement unit that measures a pressure of the dry gas enclosed in the outer tube inner space, and
in the damage detection step, the determination device
determines whether or not the pressure of the dry gas measured by the gas pressure measurement unit is less than a predetermined value, and determines whether or not the concentration of the gas measured by the gas concentration measurement unit satisfies a predetermined condition,
determines that the outer tube is damaged when the pressure of the dry gas is less than the predetermined value and the concentration of the gas measured by the gas concentration measurement unit does not satisfy the predetermined condition, and
determines that damage has occurred inside the outer tube when the pressure of the dry gas is less than the predetermined value and the concentration of the gas measured by the gas concentration measurement unit satisfies the predetermined condition.

16. The piping damage detection method according to claim 15, wherein
the gas concentration measurement unit measures a concentration of the hydrogen gas or the oxygen gas flowing through the inner tube, and
the determination device determines that the concentration of the gas satisfies the predetermined condition when the concentration of the hydrogen gas or the oxygen gas measured by the gas concentration measurement unit is less than or equal to a predetermined value.

17. The piping damage detection method according to claim 15, wherein
the gas concentration measurement unit measures a concentration of the dry gas, and
the determination device determines that the concentration of the gas satisfies a predetermined condition when the concentration of the dry gas measured by the gas concentration measurement unit is greater than or equal to a predetermined value.

18. The piping damage detection method according to claim 14, further comprising the determination device performs a damage information output step of outputting, after the damage detection step, information on occurrence of the damage and a place of the damage.
